# EUROPEAN PATENT SPECIFICATION

(11) **EP 3 945 229 B1**
(45) Date of publication and mention of the grant of the patent: **01.11.2023**
(21) Application number: 21150816.3
(22) Date of filing: 10.01.2021
(51) Int. Cl.: F16K 11/044, F16K 11/074, F16K 31/524, F16K 11/00, F16K 27/02, F16K 27/04, E03C 1/02, E03C 1/04

(54) **VALVE AND SHOWER DEVICE**
VENTIL UND DUSCHVORRICHTUNG
SOUPAPE ET DISPOSITIF DE DOUCHE

(30) Priority: 29.07.2020 CN 202010744370
(43) Date of publication of application: 02.02.2022
(73) Proprietor: Fujian Xihe Sanitary Ware Technology Co., Ltd., QuanZhou, Fujian 362304 (CN)
(72) Inventor: LIN, Xiaofa, Nan'an, QuanZhou, Fujian (CN); LIN, Xiaoshan, Nan'an, QuanZhou, Fujian (CN); DENG, Xiaoqing, Nan'an, QuanZhou, Fujian (CN); JI, Hejun, Nan'an, QuanZhou, Fujian (CN); YU, Kaishi, Nan'an, QuanZhou, Fujian (CN); LIU, Qiqiao, Nan'an, QuanZhou, Fujian (CN)
(74) Representative: Argyma

(56) References cited:
- EP-A1- 3 470 953
- CN-A- 111 006 040
- CN-A- 111 457 126
- CN-U- 210 344 386
- GB-A- 2 571 828
- GB-A- 2 575 160

## Description

### BACKGROUND

### Technical Field

The disclosure relates to the field of sanitary products, and in particular to a valve and a shower device.

### Description of Related Art

The shower device usually has a water divider for switching water output between a handheld shower and a top spray shower. The traditional water divider includes a shell, a water passing main body, a water dividing valve core, a gland and the like. The water dividing valve core is arranged in the water passing main body through the gland and is in sealing fit with the water passing main body to form a water-dividing water path. The shell is provided with a through hole for a water passing connector of the water passing main body to stretch out and fluidly communicating with an external water pipe. And the water passing main body equipped with the water dividing valve core is assembled with the shell correspondingly so as to form the water divider.

The water divider has the following defects: (1) when the water dividing valve core is assembled to the water passing main body, the water dividing valve core not only needs to be assembled with the water passing main body in a position-limiting manner, but also needs to be in sealing fit with the water passing main body; and the water passing main body also needs to be assembled with the shell in a position-limiting manner and still needs to be in sealing fit with the shell when fluidly communicating with the external water pipe; due to the cooperation of the multi-layer structures, the difficulty for assembling and for realizing sealing effect is thus increased, the volume of the water divider is enlarged and the material cost is increased; and (2) for the water divider, the shell is visible to the user, the water dividing valve core determines the water dividing function of the water divider, and the water passing main body, as an intermediate part, is of little significance to the user; however the water dividing valve core of the water divider needs to be assembled with the shell through the water passing main body and form a water path with the external water pipe, such that when new products are developed, different water dividing valve cores need to be matched with the shell through different water passing main bodies and the shells of different structures also need to be matched with the valve core through different water passing main bodies, thus the structural complexity of the products and the redundant work during product design are increased, which is not conducive to the development of the new products. CN111457126A discloses a water dividing switch valve which comprises a water inlet, two water outlets and a plurality of connectors inserted into the valve seat in a vertical direction "in a sealed manner".

### SUMMARY

An objective of the present disclosure is to overcome at least one defect or problem in the prior art and provide a valve with a modular assembling structure and a sealing structure. The valve is compact in structure, rapid in assembly and reliable in sealing effect, and is suitable for being configured as products such as a water divider, a water passing/cutting off switch, a water mixer and the like for the shower device, thereby facilitating modular design and development of the valve and the like of the shower device and effectively reducing the material cost of the product.

To achieve the above objective, the following technical solutions are adopted:
A first aspect of the present disclosure provides a valve, including: a valve seat; a valve core, the valve core being inserted into the valve seat along a first direction and in position-limiting fit with the valve seat in any direction vertical to the first direction, and the valve core having at least one water inlet channel and at least one water outlet channel; and a plurality of first connectors corresponding to each water channel of the valve core, the plurality of first connectors being inserted into the valve seat along a direction vertical to the first direction and in clamping fit with the valve seat, and the plurality of first connectors being inserted into and in sealing fit with the corresponding water channel, so as to lead water flow into or out of the valve core.

According to the valve of the embodiment of the present disclosure, the valve core is inserted into the valve seat, the plurality of first connectors are in inserting fit with the valve core and the valve seat to realize the position-limiting assembling of the valve core and the valve seat in any directions, and the plurality of first connectors are in sealing fit with the valve core directly to communicate with each water channel of the valve core. Since the valve core and the valve seat are only in position-limiting fit, but are not in sealing fit, the valve core and the valve seat are not directly related when a valve water path is constructed, so that the valve of the embodiment has the advantages of reduced parts, rapid assembling process, reduced material cost and the like. When the valve is designed and developed, it is only necessary to make the valve core and the valve seat have corresponding position-limiting assembling structures and connect the valve core and the valve seat with the first connectors of complete modular structures, thus different intermediate water passing pieces for realizing the position-limiting assembling relationship and the sealing assembling relationship between the valve core and the valve seat are not required. Different valve cores may be applied to different valve seats. Various new valve products may be combined by changing the valve seat or the valve core for the existing valve, thereby reducing the redundant work during product design and facilitating modular design and development of the valve products. In addition, after being in inserting connection to the valve seat, the plurality of first connectors are in clamping fit with the valve seat or the valve core, so that the plurality of first connectors are fixed relative to the valve seat, and the situation that a fluid communication relationship between the plurality of first connectors and the valve core fails due to the disengagement of the first connectors thus is prevented.

To achieve the above objective, a second aspect of the present disclosure provides a shower device, which includes the valve as described in above technical solution.

### BRIEF DESCRIPTION OF THE DRAWINGS

For clearer description of the technical solutions of the embodiments of the present disclosure, the accompanying drawings for describing the embodiments are introduced briefly hereinafter.
FIG. 1 is a three-dimensional diagram of a valve according to an embodiment;
FIG. 2 is a three-dimensional diagram of a valve seat according to an embodiment;
FIG. 3 is another stereogram of a valve seat according to an embodiment, which shows an internal structure of the valve seat;
FIG. 4 is a three-dimensional diagram of a valve core according to an embodiment;
FIG. 5 is a three-dimensional diagram of a first connector according to an embodiment, which shows a top of the first connector;
FIG. 6 is a three-dimensional diagram of a first connector according to an embodiment, which shows a bottom of the first connector;
FIG. 7 is a schematic diagram of an assembling process of a valve according to an embodiment;
FIG. 8 is a section view of an assembling process of a valve according to an embodiment;
FIG. 9 is a section view of a valve assembled according to an embodiment;
FIG. 10 is three-dimensional exploded view of a valve core according to Embodiment I of Valve core;
FIG. 11 is a section view of a valve core according to Embodiment I of Valve core;
FIG. 12 is a three-dimensional diagram of a top cover, a pressing piece and a driving piece not assembled according to Embodiment I of Valve core;
FIG. 13 is another three-dimensional diagram of a top cover, a pressing piece and a driving piece not assembled according to Embodiment I of Valve core;
FIG. 14 is a state diagram of a valve core according to Embodiment I of Valve core when a first water outlet channel outputs water;
FIG. 15 is a state diagram of a valve core according to Embodiment I of Valve core when a second water outlet channel outputs water;
FIG. 16 is three-dimensional exploded view of a valve core according to Embodiment II of Valve core;
FIG. 17 is a section view of a valve core according to Embodiment II of Valve core;
FIG. 18 is a three-dimensional diagram of a valve shell according to Embodiment II of Valve core;
FIG. 19 is three-dimensional exploded view of a second plugging piece according to Embodiment II of Valve core;
FIG. 20 is a state diagram of a valve core according to Embodiment II of Valve core when a first water outlet channel outputs water;
FIG. 21 is a state diagram of a valve core according to Embodiment II of Valve core when a second water outlet channel outputs water.

### Descriptions of main reference numerals:

100 valve, 10 valve seat, 20 valve core, 30 first connector,11 clamping hole, 12 first groove, 13 second groove, 14 axial limiting portion, 15 inclined guiding surface, 16 position-limiting rib, 17 guiding and position-limiting groove, 21 valve body, 22 pressing piece, 23 driving piece, 24 first plugging piece, 25 second plugging piece, 26 first elastic piece, 27 second elastic piece, 28 third elastic piece, 211 valve shell, 212 water inlet channel, 213A first water outlet channel, 213B second water outlet channel, 214 bottom cover, 215A water passing cylinder, 215B supporting base, 216 top cover, 217 water passing cavity, 218 pressing cavity, 2111 second connector, 2112 guiding and position-limiting rib, 2113 neck portion, 2171A first water passing opening, 2172B second water passing opening, 2173 water passing wall, 215A1 water through hole, 215B1 aperture, 2181 pressing hole, 2182 channel, 2183 protruded block, 21831 tooth bottom, 21832 sliding connection surface, 21833 guide surface, 221abutting surface, 222 clamping block, 231 driving piece main body, 232 driving piece base body, 233 bulge, 2321 abutted surface, 2331 outer inclined surface, 241 first sealing ring, 242 second sealing ring, 251 connecting rod, 252 leather cup base, 253 leather cup, 254 leather cup spring, 2511 third sealing ring, 31 base body, 32 plug, 33 elastic clamping claw, 34 rotation-stopping rib, 321 plug sealing ring.

### DESCRIPTION OF THE EMBODIMENTS

The technical solutions of the embodiments are described clearly and completely with reference to the accompanying drawings.

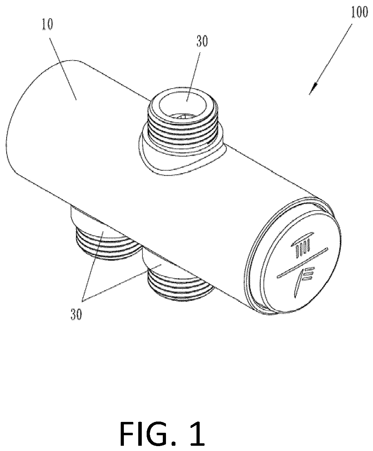

Referring to FIG. 1, the embodiment provides a valve 100, which is exemplarily in a form of a water divider and includes a valve seat 10, a valve core 20 and three first connectors 30.

The specific structure of the valve 100 according to the embodiment is described with reference to other accompanying drawings.

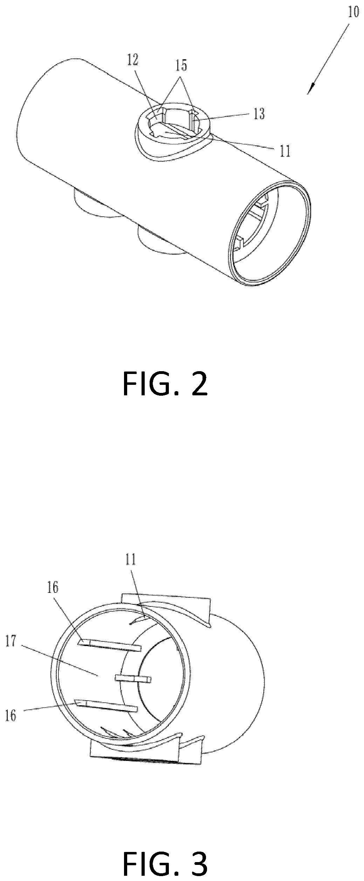

Referring to FIG. 2, FIG. 3 and FIG. 8, the valve seat 10 is of a revolved body structure, in which an assembling cavity with a revolving structure is formed. In the embodiment, a direction of an axis of revolution of the valve seat 10 is defined as a first direction, and a radial direction of the valve seat 10 is defined as a second direction; furthermore, it should be understood that the valve seat 10 forms a shell of the water divider of the embodiment. In the embodiment, the valve 100 is arranged along a horizontal direction, the first direction is the horizontal direction and the second direction is a direction vertical to the first direction.

In the specific structure, three clamping holes 11 are formed in a circumferential wall of the valve seat 10 and penetrate through the circumferential wall of the valve seat 10 along the second direction; and two first grooves 12 and two second grooves 13 which are arranged at an interval of 180°along a circumferential direction are formed at an outer end of the clamping holes 11, and an axial limiting portion 14 is formed at an inner end of the clamping holes 11. Inclined guiding surfaces 15 are formed at an outward end of each of the first grooves 12 and the second grooves 13, and the axial limiting portion 14 is formed by an end face where an inner wall of the valve seat 10 and the clamping holes 11 intersect.

In addition, two position-limiting rib groups which are arranged oppositely are arranged in the assembling cavity. Each position-limiting rib group includes two position-limiting ribs 16 which are convexly arranged on an inner wall of the assembling cavity at intervals along a circumferential direction. The two position-limiting ribs16 extend along the first direction so as to form a guiding and position-limiting groove 17 therebetween, the guiding and position-limiting groove 17 extending along the first direction. Since the two position-limiting rib groups are arranged oppositely, the two guiding and position-limiting grooves 17 formed are parallel to each other with notches being opposite.

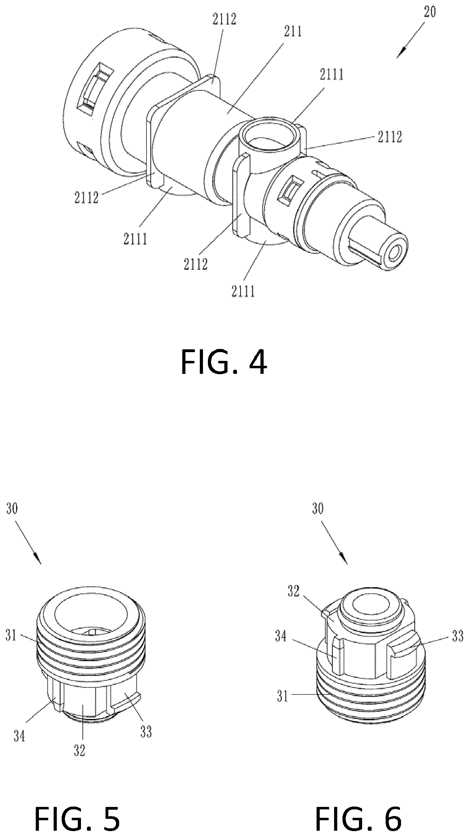

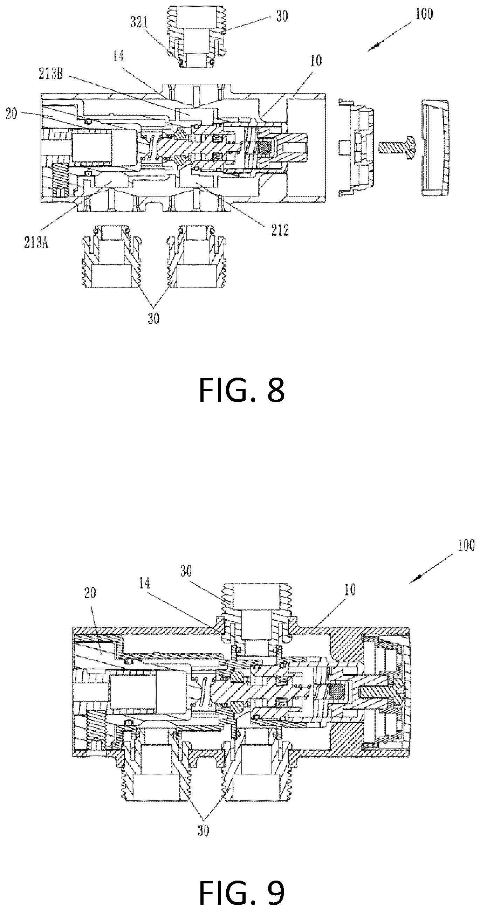

Referring to FIG. 4 and FIG. 8, the valve core 20 is provided with a valve shell 211 matched with the assembling cavity, and thus the valve shell 211 is substantially of a revolved body structure. The valve shell 211 is internally provided with a valve cavity as well as a water inlet channel 212 and two water outlet channels that communicate with the valve cavity. The two water outlet channels are a first water outlet channel 213A and a second water outlet cavity 213B respectively. A water path control structure is arranged in the valve cavity for switching the communication between the water inlet channel 212 and the two water outlet channels 213A, 213B. The valve cavity of the valve core 20 and the water path control structure in the valve cavity will be described in detail later. The structure of the valve shell 211 is introduced first herein.

Specifically, the valve shell 211 is fixedly provided with three second connectors 2111, in which the water inlet channel 212 and the two water outlet channels 213A, 213B are respectively formed. In addition, at least one guiding and position-limiting rib group is arranged outside the valve shell 211. The guiding and position-limiting rib group includes two sheet-like guiding and position-limiting ribs 2112, the two guiding and position-limiting ribs 2112are located at the same axial position of the valve shell 211 and are convexly arranged on the valve shell 211 respectively along opposite directions. The two guiding and position-limiting ribs 2112 are parallel to each other, a length of each of the two guiding and position-limiting ribs 2112 is matched with a distance between the two position-limiting ribs 16 of the position-limiting rib group, so that each guiding and position-limiting rib 2112 is suitable for sliding along an extension direction of the guiding and position-limiting groove 17 and is in limiting fit with the guiding and position-limiting groove 17 on a plane vertical to the first direction. In the embodiment, the valve core 20 has two guiding and position-limiting rib groups, which are arranged at intervals along an axial direction of the valve shell 211.

In the embodiment, the valve core 20 slides along the first direction and is inserted into the assembling cavity of the valve seat 10. In this process, the guiding and position-limiting rib 2112 is slidably arranged in the guiding and position-limiting groove 17 and is in limiting fit with the guiding and position-limiting groove 17, so that the valve core 20 is guided to be inserted into the valve seat 10 along the first direction, and the valve core 20 and the valve seat 10 are in position-limiting fit with each other on a plane vertical to the first direction. More advantageously, through the position-limiting fit of the guiding and position- limiting rib 2112 and the guiding and position-limiting groove 17, a circumferential position where the valve 20 is assembled to the valve seat 10 could be defined, so that each second connector 2111 of the valve core 20 and the corresponding water channel are aligned with the clamping holes 11 of the valve seat 10 in the circumferential direction, thereby facilitating rapid connection of the first connectors 30 and the valve core 20.

Referring to FIG. 5, FIG. 6 and FIG. 8, the three first connectors 30 respectively correspond to a certain valve channel of the valve core 20 and are configured to fluidly communicate the water inlet channel 212 and the two water outlet channels 213A, 213B of the valve core 20 with a water inlet pipe and two water outlet pipes outside. In the embodiment, each of the first connectors 30 includes a base body 31 and a plug 32; an external thread is formed on an outer wall of the base body 31 for being threadedly connected to an external water pipe; and a plug sealing ring 321 is arranged on an end part of the plug 32. The plug 32 is suitable for being in inserting fit with the clamping holes 11 along the second direction and is inserted into the valve seat 10, and the plug 32is also in inserting fit with the second connectors 2111 and the water channels thereof, so that the plug sealing ring 321 is in tight fit with inner walls of the second connectors 2111, thereby realizing sealing fit between the first connectors 30 and the second connectors 2111 and leading water flow into or out of the valve core 20.

In addition, after being in inserting connection to the valve seat 10, the first connectors 30 are also in clamping fit with the valve seat 10, so that the first connectors 30 are fixed relative to the valve seat 10, and the situation that a fluid communication relationship between the first connectors 30 and the valve core 20 fails due to the disengagement of the first connectors 30 thus is prevented. Further, since the first connectors 30 are in inserting fit with the valve seat 10 and the valve core 20 along the second direction, relative motion of the valve core 20 and the valve seat 10 along the first direction is prevented by the first connectors 30, thereby realizing position-limiting fit between the valve core 20 and the valve seat 10 in any directions.

In the specific structure, each of the first connectors 30 is a round connector and is provided with two elastic clamping claws 33 which are arranged symmetrically along the circumferential direction. The two elastic clamping claws 33 form a clamping connection portion of the first connector 30. When being inserted into the clamping holes 11 along with the first connectors 30, the elastic clamping claws 33 enter the clamping holes 11 along the first grooves 12 and contract inwards elastically for being urged against by inner walls of the clamping holes 11. When the elastic clamping claws 33 move to the axial position-limiting portion 14 along with the first connectors 30, since the urging force of the inner walls of the clamping holes 11 on the elastic clamping claws 33 disappears, the elastic clamping claws 33 are released to expand outwards elastically and are hooked on the axial position-limiting portion 14, so that the elastic clamping claws 33 are in position-limiting fit with the axial limiting portion 14 along the axial directions of the clamping holes 11.

Therefore, in the embodiment, the first connectors 30 are in clamping fit with the valve seat 10through the elastic clamping fit between the clamping holes 11 and the clamping connection portion, and simple structure and rapid assembling are realized. Furthermore, when the first connectors 30 are threadedly connected to the external water pipe, the clamping fit relationship between the first connectors 30 and the valve seat 10 will not be disengaged and the fluid communication between the first connectors 30 and the valve core 20 has high stability.

In addition, rotation-stopping ribs 34 are arranged on outer circumferential walls of the first connectors 30 and are configured to be in position-limiting fit with the second groove 13 of the valve seat 10 along the circumferential direction when the first connectors 30 are inserted into the clamping holes 11, so that the second groove 13 forms a rotation-stopping groove; and the rotation-stopping ribs 34 are configured to prevent relative motion of the first connectors 30 and the valve seat 10 along the circumferential direction of the clamping holes 11 when the first connectors 30 are connected to the valve seat 10, thereby facilitating threaded connection between the first connectors 30 and the external water pipe.

Preferably, in the connection process of the first connectors 30, the inclined guiding surfaces 15 provided on the first grooves 12 and the second grooves 13 of the clamping holes 11 are respectively configured to guide the elastic clamping claws 33 and the rotation-stopping ribs 34 to be inserted into the clamping holes 11, so as to guide the first connectors 30 to be rapidly connected to the valve seat 10.

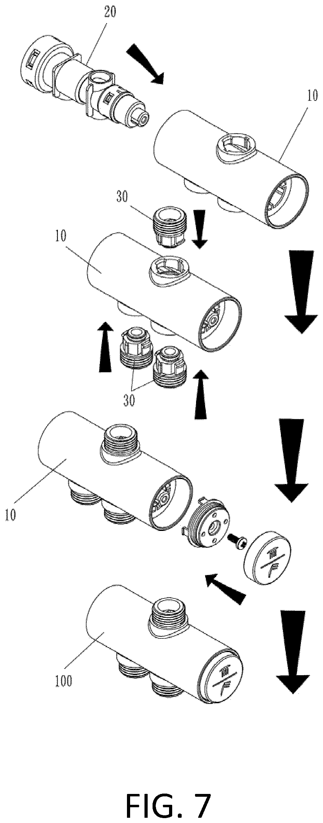

Referring to FIG. 7 to FIG. 9, the assembling process of the valve 100 according to the embodiment is as follows: (1) the valve core 20 is inserted into the valve seat 10 along the first direction, and the valve core 20 and the valve 10 are in position-limiting fit on the plane vertical to the first direction through the position-limiting action of the guiding and position-limiting rib 2112 and the guiding and position-limiting groove 17; (2) each first connector 30 is inserted into the corresponding clamping hole 11 along the second direction and is in clamping fit with the clamping hole 11; meanwhile, each first connector 30 is correspondingly inserted into and in sealing fit with the second connector 2111 of the valve core 20,so as to lead water flow into the valve core 20 from outside or lead the water flow in the valve core 20 to the outside; and (3) since the water dividing valve core 20 of the embodiment is operated by pressing, the valve 100 of the embodiment further correspondingly includes a button, a connecting base and a screw, the button is in interference fit with the connecting base, and the connecting base and the button are fixedly connected to a valve rod of the valve core 20 through a threaded fastener, so that assembling of the valve 100 is realized and the valve 100 can be operated by users through pressing the button and thus realizing water switching.

It can be seen from the above description that for the valve 100 of the embodiment, the valve core 20 is inserted into the valve seat 10, the first connectors 30 are in inserting fit with the valve core 20 and the valve seat 10 to realize the position-limiting assembling of the valve core 20 and the valve seat 10 in any directions, and the first connectors 30 are directly in sealing fit with the valve core 20 to lead water flow into or out of the valve core 20. Since the valve core 20 and the valve seat 10 are only in position-limiting fit, but are not in sealing fit, the valve core 20 and the valve seat 10 are not directly related when a valve water path is constructed, so that the valve 100 of the embodiment has the advantages of reduced parts, reduced volume, rapid assembling process, reduced material cost and the like. When the valve is designed and developed, it is only necessary to make the valve core 20 and the valve seat 10 have corresponding position-limiting assembling structures and connect the valve core 20 and the valve seat 10 with the first connectors 30 of complete modular structures correspondingly, thus different intermediate water passing pieces for realizing the position-limiting assembling relationship and the sealing assembling relationship between the valve core 20 and the valve seat 10 are not required. In this way, different valve cores 20 may be applied to different valve seats 10. Various new valve products may be combined by changing the valve seat or the valve core for the existing valve, thereby reducing the redundant work during product design and facilitating modular design and development of the valve products.

The internal specific structure of the valve core 20 is described below in detail so as to enable those skilled in the art to easily implement the valve 100 of the present disclosure. The present disclosure provides two different valve core embodiments.

### Embodiment I of Valve core

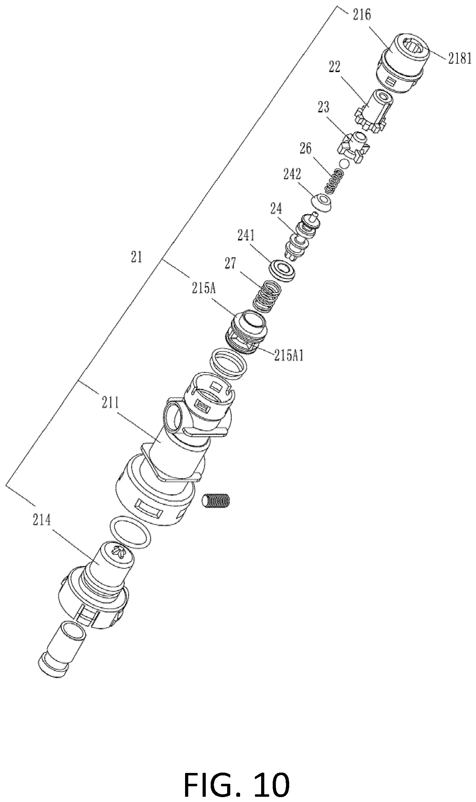

Referring to FIG. 10 to FIG. 15, the valve core 20 has a revolved body structure and includes a valve body 21, a pressing piece 22, a driving piece 23, a first plugging piece 24, a first elastic piece 26 and a second elastic piece 27.

Referring to FIG. 10 to 11, the valve body 21 includes a valve shell 211, a bottom cover 214, a water passing cylinder 215A and a top cover 216 which are fixedly connected mutually. A water inlet channel 212, a first water outlet channel 213A and a second water outlet channel 213B are formed in the valve shell 211. The bottom cover 214 is fixedly connected to one end of the valve shell 211, the water passing cylinder 215A is arranged in the valve shell 211, and the top cover 216 is fixedly connected to the other end of the valve shell 211, so that after the aforementioned parts of the valve body 21 are assembled, a water passing cavity 217 and a pressing cavity 218 are formed in the valve body 21.

The valve shell 211 and the water passing cylinder 215A jointly forms the water passing cavity 217, the water passing cavity 217 communicates with the water inlet channel 212 and is provided with a first water passing opening 2171A and a second water passing opening 2172A along the axial direction of the valve core 20, and the first water passing opening 2171A and the second water passing opening 2172A are respectively configured to communicate the water inlet channel 212 with the first water outlet channel 213A and the second water outlet channel 213B. In the embodiment, a neck portion 2113 is arranged in the valve shell 211, and a neck of the neck portion 2113 forms the first water passing opening 2171A; the water passing cylinder 215A is hollow and is provided with a water through hole 215A1 penetrating through a circumferential wall of the water passing cylinder 215A. One end of the water passing cylinder 215A is open and forms the second water passing opening 2172A; and the water through hole 215A1 is configured to communicate the second water passing opening 2172A with the second water outlet channel 213B.

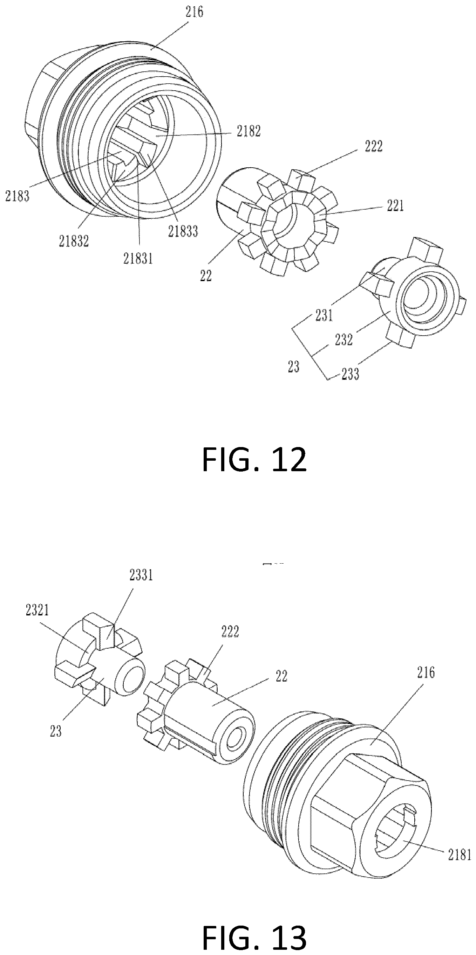

Referring to FIG. 12,the pressing cavity 218 is enclosed by the top cover 216; the pressing cavity 218 is provided with a pressing hole 2181 along the axial direction of the valve core 20.A plurality of protruded blocks 2183 mutually spaced by a channel 2182 are arranged on a side wall of the pressing cavity 218 along the circumferential direction of the valve core 20; and each of the protruded blocks 2183 has a toothed bottom surface, and the toothed bottom surface includes a sliding connection surface 21832 inclined to a tooth bottom 21831 and a guide surface 21833 inclined to the channel 2182.

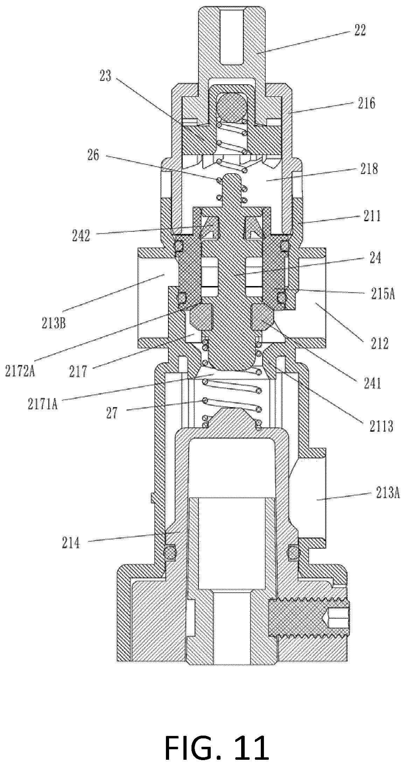

Referring to FIG. 11 to FIG. 13, the pressing piece 22 is assembled in the pressing cavity 218. One end of the pressing piece 22 stretches out of the pressing hole 2181 so as to be fixedly connected to a button, and the other end of the pressing piece 22 is provided with an inclined abutting surface 221. Clamping blocks 222 are arranged on an outer wall of the pressing piece 22 and are inserted into the channel 2182, so that the pressing piece 22 is in rotation-stopping fit with the valve body 21.

Referring to FIG. 11 to FIG. 13, the driving piece 23 is assembled in the pressing cavity 218, and is provided with an abutted surface 2321 opposite to the abutting surface 221 and an outer inclined surface 2331 opposite to the sliding connection surface 21832 and the guide surface 21833. In the specific structure, the driving piece 23 includes a driving piece main body 231, a driving piece base body 232 and a plurality of bulges 233 integrally formed. The plurality of bulges 233 are protruded outside the driving piece base body 232. The driving piece main body 231 is of a revolved body structure; the driving piece base body 232 is provided with a plurality of abutted surfaces 2321 which are arranged at intervals along a circumferential direction of the driving piece main body 231; and the bulges 233 are arranged at intervals along the circumferential direction of the driving piece main body 231 and are provided with the outer inclined surfaces 2331. The plurality of abutted surfaces 2321 and the plurality of outer inclined surfaces 2331 are staggered mutually along the circumferential direction of the driving piece main body 231.

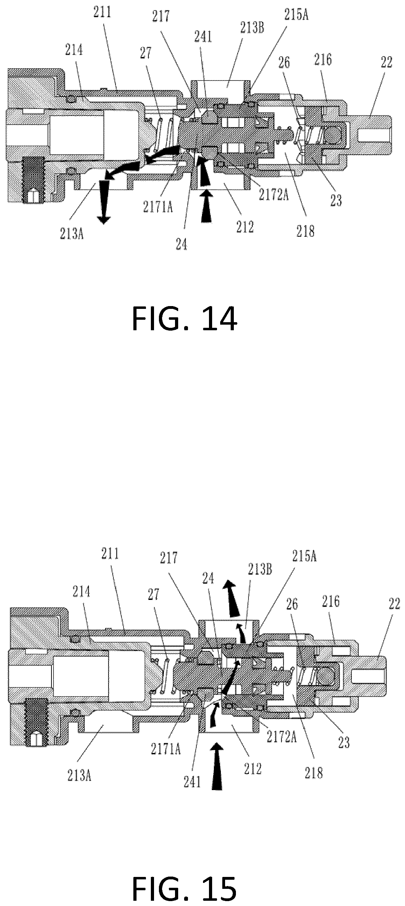

Referring to FIG. 10, FIG. 11, FIG. 14 and FIG. 15, the first plugging piece 24 is in the form of a rod body and passes through the water passing cylinder 215A; one end part of the first plugging piece 24 is sleeved with a first sealing ring 241 and is slidably arranged in the water passing cavity 217, and the other end part of the first plugging piece 24 stretches into the pressing cavity 218 and is driven by the driving piece 23 to be slidably arranged between a first axial direction position and a second axial position along the axial direction of the valve core 20. The other end part of the first plugging piece 24 is sleeved with a second sealing ring 242 and is in sealing fit with an inner wall of the water passing cylinder 215A, so as to separate the water passing cavity 217 and the pressing cavity 218sealingly. At the first axial position, the end part, provided with the first sealing ring 241, of the first plugging piece 24 plugs the second water passing opening 2172A, so that water passes through the first water passing opening 2171A, as shown in FIG. 14; and at the second axial position, the end part, provided with the first sealing ring 241, of the first plugging piece 24 plugs the first water passing opening 2171A, so that water passes through the second water passing opening 2172A, as shown in FIG. 15.

Referring to FIG. 11, the first elastic piece 26 and the second elastic piece 27 are springs. The first elastic piece 26 is arranged between the first plugging piece 24 and the driving piece 23, so as to transfer a driving force of the driving piece 23 to the first plugging piece 24 and drive, when the pressing piece 22 is released, the driving piece 23 to move towards the pressing hole 2181 until the bulges 233 of the driving piece 23 stop at the tooth bottom 21831 or the channel 2182. Two ends of the second elastic piece 27 respectively abut against the bottom cover 214 of the valve body 21 and the first plugging piece 24 for driving the first plugging piece 24 to reset when the first plugging piece 24 is not abutted against by the driving piece 23 and the first elastic piece 26.

The working process of the valve core 20 according to Embodiment I of valve core is as follows: Based on the state as shown in FIG. 15, the pressing piece 22 is pressed leftwards and moves leftwards until the abutting surface 221 abuts against the abutted surface 2321, so that the driving piece 23 moves leftwards first, and during this period, the first elastic piece 26 is compressed for energy storage. When the pressing piece 22 is released, the first elastic piece 26 releases energy to drive the driving piece 23 to move rightwards, and the driving piece 23 continuously rotates after abutting against the guide surface 21833 until the bulges 233 of the driving piece 23 stop in the channel 2182. Then, since the stopping position of the channel 2182 is higher than the stopping position of the tooth bottom 21831, in a direction as shown in the figure, the driving piece 23 entirely moves rightwards and does not have an abutting force against the first plugging piece 24, the first plugging piece 24 thus is driven by the second elastic piece 27 to reset rightwards and slides to the first axial position, and the first plugging piece 24 plugs the second water passing opening 2172A, so that water passes through the first water passing opening 2171A, the valve core 20 is in the state as shown in FIG. 14, and water flow is output from the first water outlet channel 213A.

Based on the state as shown in FIG. 14, the pressing piece 22 is still pressed leftwards and moves leftwards until the abutting surface 221 abuts against the abutted surface 2321, so that the driving piece 23 moves leftwards first, and during this period, the first elastic piece 26 is compressed for energy storage. When the pressing piece 22 is released, the first elastic piece 26 releases energy to drive the driving piece 23 to move rightwards, and the driving piece 23 continuously rotates after abutting against the sliding connection surface 21832 until the bulges 233 of the driving piece 23 stop at the tooth bottom 21831. Then, since the stopping position of the tooth bottom 21831 is lower than the stopping position of the channel 2182, in a direction as shown in the figure, the driving piece 23 entirely moves leftwards and abuts against the first plugging piece 24 to overcome an elastic force of the second elastic piece 27 to slide leftwards to the second axial position, the first plugging piece 24 plugs the first water passing opening 2171A, so that water passes through the second water passing opening 2172A, the valve core 20 is in the state as shown in FIG. 15, and water flow is output from the second water outlet channel 213B.

### Embodiment II of Valve core

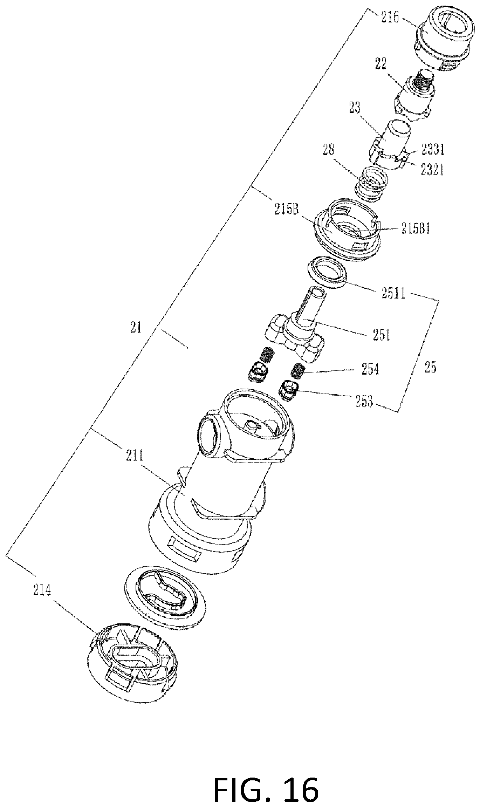

Referring to FIG. 16 to FIG. 21, the present disclosure further provides another embodiment of the valve core 20. Since the two embodiments have many parts with the basically same structures and functions, while describing Embodiment II of Valve core, the basically same parts of this embodiment will adopt the same reference numerals as those of Embodiment I of Valve core. In Embodiment II of Valve core , the valve core 20 is of a revolved body structure and includes a valve core 21, a pressing piece 22,a driving piece 23, a second plugging piece 25 and a third elastic piece 28.

Referring to FIG. 16 to FIG. 18, the valve body 21 includes a valve shell 211, a bottom cover 214, a supporting base 215B and a top cover 216 which are fixedly connected mutually. A water inlet channel 212, a first water outlet channel 213A and a second water outlet channel 213B are formed in the valve shell 211. The bottom cover 214 is fixedly connected to one end of the valve shell 211, the supporting base 215B is fixedly connected to the other end of the valve shell 211, and the top cover 216 is fixedly connected to the other end, away from the bottom cover 214, of the supporting base 215B, so that after the aforementioned parts of the valve body 21 are assembled, a water passing cavity 217 and a pressing cavity 218 are formed in the valve body 21.

The water passing cavity 217 is enclosed by the valve shell 211 and the supporting base 215B, the water passing cavity 217 communicates with the water inlet channel 212, and a water passing wall 2173 vertical to the valve core 20 is arranged axially on an inner wall of the water passing cavity 217. The water passing wall 2173 is provided with a first water passing opening 2171B and a second water passing opening 2172B along the circumferential direction of the valve core 20, and the first water passing opening 2171B and the second water passing opening 2172B are respectively configured to communicate the water inlet channel 212 with the first water outlet channel 213A and the second water outlet channel 213B. In the embodiment, both the first water passing openings 2171B and the second water passing openings 2172B are two in number and are staggered mutually. Each of the first water passing openings 2171B and the adjacent second water passing opening 2172B are arranged at an interval of 90°along the circumferential direction of the valve core 20, the two first water passing openings 2171B are arranged at an interval of 180°, and the two second water passing openings 2172B are arranged at an interval of 180°.

The pressing cavity 218 is enclosed by the top cover 216, and the supporting base 215B is provided with an aperture 215B 1. In this embodiment of the valve core, the internal structure of the pressing cavity 218 and the structures of the pressing piece 22 and the driving piece 23 are basically the same as those of the corresponding parts in the valve core embodiment I, which are thus not elaborated herein. Furthermore, the reference numerals of the above parts and the sub-parts thereof mentioned below may also be referenced to the reference numerals of the corresponding parts in Embodiment I of Valve core. However, it is worth noting that although the structure and the motion state of the driving piece 23 in the two valve core embodiments are the same, that is, the superposition of rotary motion and linear motion, the linear motion of the driving piece 23 is mainly used in the valve core embodiment I, so the driving piece 23 provides a driving force along the axial direction of the valve core 20 to the first plugging piece 24, while the rotary motion of the driving piece 23 is mainly used in this embodiment of the valve core, so the driving piece 23 provides a driving force along the circumferential direction of the valve core 20 to the second plugging piece 25 as to be described below.

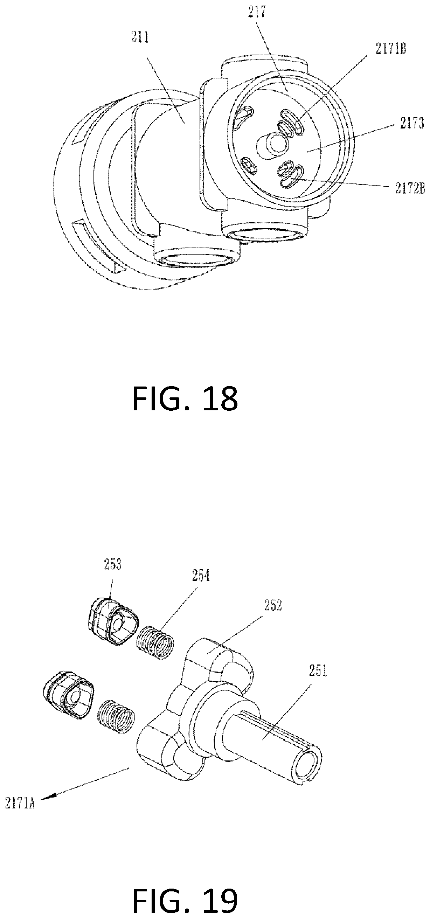

Referring to FIG. 19, the second plugging piece 25 includes a connecting rod 251, two leather cup bases 252, two leather cups 253 and two leather cup springs 254. The connecting rod 251 passes through the aperture 215B1 of the supporting base 215B, and the two ends of the connecting rod 251 are respectively located in the water passing cavity 217 and the pressing cavity 218. A middle part of the connecting rod 251 is sleeved with a third sealing ring 2511, and the third sealing ring 2511 is in sealing fit with the supporting base 251B, so as to separate seal and isolate the water passing cavity 217 and the pressing cavity 218sealingly. Specifically, one end of the connecting rod 251 stretches into the pressing cavity 218 and is in rotation-stopping fit with the driving piece 23 in a relatively sliding manner, so as to be driven by the driving piece 23 to rotate between a first circumferential position and a second circumferential position along the circumferential direction of the valve core 20. The two leather cup bases 252 and the connecting rod 251 are formed integrally; and the two leather cup bases 252 are convexly arranged at the other end part of the connecting rod 251 along the circumferential direction of the valve core 20, and the two leather cup bases are arranged at an interval of 180°. Each of the leather cup bases 252 has a hollow cavity, the two leather cups 253 are respectively arranged at the inner cavities of the two leather cup bases 252, the two leather cup springs 254 are respectively arranged at the inner cavities of the two leather cup bases 252, and the two ends of the two leather cup springs 254 abut against the leather cup bases 252 and the leather cups 253 respectively, so that the two leather cups 252 are pressed against the water passing wall 2173.

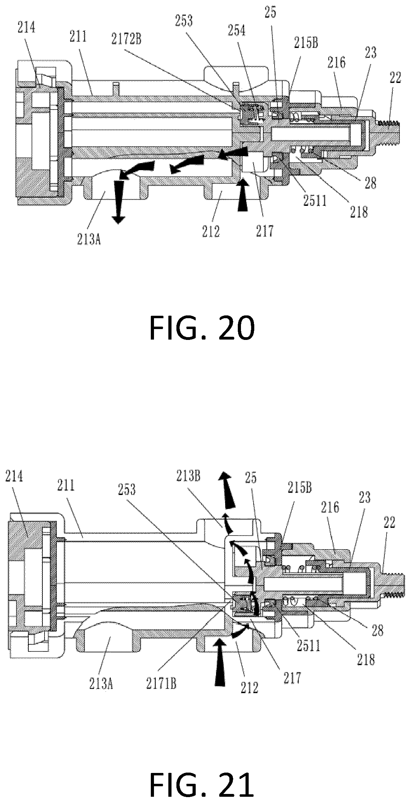

At the first circumferential position, the two leather cups 253 of the second plugging piece 25 correspondingly plug the two second water passing openings 2172B, so that water passes through the first water passing openings 2171B, as shown in FIG. 20; and at the second circumferential position, the two leather cups 253 of the second plugging piece 25 correspondingly plug the two first water passing openings 2171B, so that water passes through the second water passing openings 2712B, as shown in FIG. 21.

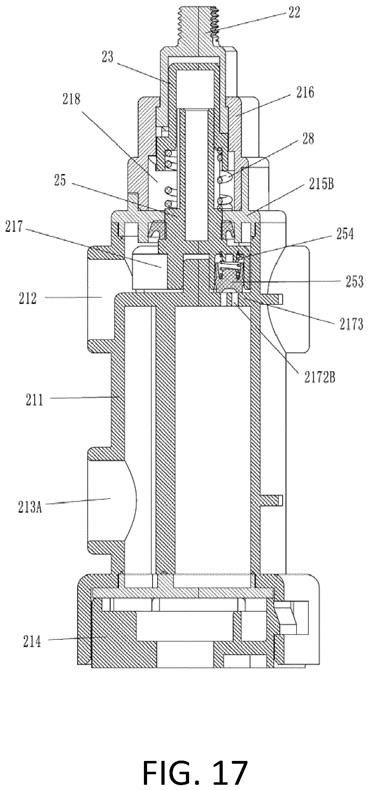

Referring to FIG. 17, the third elastic piece 28 is a spring and is arranged between the driving piece 23 and the supporting base 215B, so as to drive, when the pressing piece 22 is released, the driving piece 23 to move towards the pressing hole 2181 until the bulges 233 of the driving piece 23 stop at the tooth bottom 21831 or the channel 2182.

The working process of the valve core 20 according to Embodiment II of Valve core is as follows: Based on the state as shown in FIG. 21, the pressing piece 22 is pressed leftwards and moves leftwards until the abutting surface 221 abuts against the abutted surface 2321, so that the driving piece 23 moves leftwards first, and during this period, the third elastic piece 28 is compressed for energy storage. When the pressing piece 22 is released, the third elastic piece 28 releases energy to drive the driving piece 23 to move rightwards, and the driving piece 23 continuously rotates after abutting against the guide surface 21833 until the bulges 233 of the driving piece 23 stop in the channel 2182. In this process, the driving piece 23 drives the second plugging piece 25 to rotate by 90° to the first circumferential position, and the second plugging piece 25 plugs the second water passing openings 2172B, so that water passes through the first water passing openings 2171B, the valve core 20 is in the state as shown in FIG. 20, and water flow is output from the first water outlet channel 213A.

Based on the state as shown in FIG. 21, the pressing piece 22 is pressed leftwards and moves leftwards until the abutting surface 221 abuts against the abutted surface 2321, so that the driving piece 23 moves leftwards first, and during this period, the third elastic piece 28 is compressed for energy storage. When the pressing piece 22 is released, the third elastic piece 28 releases energy to drive the driving piece 23 to move rightwards, and the driving piece 23 continuously rotates after abutting against the guide surface 21833 until the bulges 233 of the driving piece 23 stop at the tooth bottom 21831. In this process, the driving piece 23 drives the second plugging piece 25 to rotate by 90° to the second circumferential position, and the second plugging piece 25 plugs the first water passing openings 2171B, so that water passes through the second water passing openings 2172B, the valve core 20 is in the state as shown in FIG. 21, and water flow is output from the second water outlet channel 213B.

Moreover, the embodiment of the present disclosure further provides a shower device, including a shower faucet, a top spray shower, a handheld shower and the valve 100 as described by the above embodiments and configured as the water divider. The shower faucet, the top spray shower and the handheld shower are correspondingly connected to each of the first connectors 30 of the valve 100 through water pipes, thereby realizing overall assembling of the shower device and communication of corresponding water paths.

In the claims, the description and the above accompanying drawings of the present disclosure, unless otherwise specifically defined, if used, the terms "first", "second" and the like are intended to distinguish different objects, but not intended to describe a specific order.

In the claims, the description and the above accompanying drawings of the present disclosure, unless otherwise specifically defined, for position words, if used, the terms "center", "transverse", "longitudinal", "horizontal", "vertical", "top", "bottom", "inner", "outer", "upper", "lower", "front", "rear", "left", "right", "clockwise", "anticlockwise" and the like are the orientations and position relationships shown based on the drawings, and the orientations and position relationships are for ease of description only and do not imply that the apparatus or element referred to must have a specific orientation or be constructed and operated in a specific orientation; therefore, these terms cannot be interpreted as a limitation to the specific protection scope of the present disclosure.

In the claims, the description and the above accompanying drawings of the present disclosure, unless otherwise specifically defined, if used, the term "fixed connection" or "fixedly connected" should be understood in a broad sense, that is, any connection method without displacement relationship and relative rotation relationship between the two, that is, including non-removable fixed connection, removably fixed connection, connected as a whole, and fixed connection through other devices or components.

In the claims, the description and the above accompanying drawings of the present disclosure, if used, the terms "include", "have" and variations thereof are intended to be construed as "including, but not limited to".

The descriptions of the above specification and embodiments are intended to explain the protection scope of the present disclosure, but do not constitute a limitation to the protection scope of the present disclosure. Based on the enlightenment of the present disclosure or the above embodiments, modifications, equivalent replacements or other improvements which may be obtained by those skilled in the art through combination of common knowledge, ordinary technical knowledge in the art and/or the prior art and through logical analysis, inference or limited test are within the protection scope of the present disclosure, as defined by the appended claims.

## Claims

1. A valve (100) extending along a horizontal direction, comprising
• a valve seat (10);
• a valve core (20), the valve core (20) being inserted into the valve seat (10) along a first horizontal direction and in limiting fit with the valve seat (10) in any vertical direction, and the valve core (20) being provided with at least one water inlet channel (212) and at least one water outlet channel; and
• a plurality of first connectors (30) corresponding to each water channel of the valve core (20), the plurality of first connectors (30) being inserted into the valve seat (10) along a vertical direction and in clamping fit with the valve seat (10), and the plurality of first connectors (30) being respectively inserted into and in sealing fit with the corresponding water channels so as to lead water flow into or out of the valve core (20),
• the valve seat (10) being provided with a plurality of clamping holes (11) for the plurality of first connectors (30) to be inserted into and in inserting fit with; and the plurality of first connectors (30) have clamping portions, the clamping portions being suitable for being in elastic clamping fit with the clamping holes (11) when the plurality of first connectors (30) are inserted into the clamping holes (11), so as to achieve the clamping fit between the plurality of first connectors (30) and the valve seat (10),
• **characterized in that** axial limiting portions (14) are being arranged at the tail ends of the clamping holes (11) along inserting directions of the plurality of first connectors (30), and the clamping portions are formed by a plurality of elastic clamping claws (33) which are arranged symmetrically along circumferential directions of the plurality of first connectors (30); and
• the plurality of elastic clamping claws (33) are inserted into the plurality of clamping holes (11) and contract inwards while being urged against by inner walls of the plurality of clamping holes (11), and the plurality of elastic clamping claws (33) are released to expand outwards while moving to the axial limiting portions (14) and are in position-limiting fit with the axial limiting portions (14) along axial directions of the plurality of clamping holes (11).

2. The valve (100) according to claim 1, **characterized in that** the valve core (20) is provided with a valve shell (211), the valve shell (211) is fixedly provided with a plurality of second connectors (2111), and the water inlet channel (212) and the at least one water outlet channel are respectively formed in the plurality of second connectors (2111); and each of the plurality of first connectors (30) is respectively inserted into and in sealing fit with each of the plurality of second connectors (2111) correspondingly along a vertical direction.

3. The valve (100) according to claim 1, **characterized in that** inclined guiding surfaces (15) are arranged at the initial ends of the plurality of clamping holes (11) along inserting directions of the plurality of first connectors (30) for guiding the plurality of elastic clamping claws (33) to be inserted into the plurality of clamping holes (11).

4. The valve (100) according to claim 1, **characterized in that** rotation-stopping grooves are formed in inner circumferential walls of the plurality of clamping holes (11), and rotation-stopping ribs (34) are arranged on outer circumferential walls of the plurality of first connectors (30); and the rotation-stopping grooves are in position-limiting fit with the rotation-stopping ribs (34) when the plurality of first connectors (30) are inserted into the plurality of clamping holes (11), so as to limit relative motion of the plurality of first connectors (30) and the valve seat (10) along circumferential directions of the plurality of clamping holes (11).

5. The valve (100) according to claim 1, **characterized in that** a valve shell (211) of the valve core (20) is provided with a guiding and position-limiting rib (2112); and
a guiding and position-limiting groove (17) is formed in the valve seat (10) along the first horizontal direction and is in position-limiting fit with the guiding and position-limiting rib on a vertical plane, thus realizing position-limiting fit between the valve core (20) and the valve seat (10) and guiding the valve core (20) to be inserted into the valve seat (10) along the first horizontal direction, and enabling the water inlet channel (212) and the at least one water outlet channel to be aligned with the plurality of clamping holes (11) of the valve seat (10) along a vertical direction.

6. The valve (100) according to claim 1, **characterized in that** the valve core (20) is a water dividing valve core of a revolved body structure, and comprises a valve body (21), a pressing piece (22), a driving piece (23), a first plugging piece (24), a first elastic piece (26) and a second elastic piece (27);
the water inlet channel (212) and the at least one water outlet channel are formed in the valve body (21), the number of the water inlet channel (212) is one, and the number of the at least one water outlet channel is two, the at least one water outlet channel for being a first water outlet channel (213A) and a second water outlet channel (213B) respectively; a water passing cavity (217) and a pressing cavity (218) are formed in the valve body (21); the water passing cavity (217) communicates with the water inlet channel (212) and is provided with a first water passing opening (2171A) and a second water passing opening (2172B), the first water passing opening (2171A) and the second water passing opening (2172B) being respectively configured to communicate the water inlet channel (212) with the first water outlet channel (213A) and the second water channel (213B); the pressing cavity (218) is provided with a pressing hole (2181) along an axial direction of the valve core (20), and a plurality of protruded blocks (2183) mutually spaced by a channel (2182) are arranged on a side wall of the pressing cavity (218) along a circumferential direction of the valve core (20), each of the plurality of protruded blocks (2183) having a toothed bottom surface and the toothed bottom surface comprising a sliding connection surface (21832) inclined to a tooth bottom (21831) and a guide surface (21833) inclined to the channel (2182);
the pressing piece (22) is in rotation-stopping fit with the valve body (21) and slides relative to the valve body (21) along the axial direction of the valve core (20), one end of the pressing piece (22) stretching out of the pressing hole (2181) and the other end of the pressing piece (22) being provided with an inclined abutting surface (221);
the driving piece (23) is provided with an abutted surface (2321) opposite to the abutting surface (221) and an outer inclined surface (2331) opposite to the sliding connection surface (21832) and the guide surface (21833);
the first plugging piece (24) is driven by the driving piece (23) to slide in the water passing cavity (217) along the axial direction of the valve core (20) and plug the first water passing opening (2171A) and the second water passing opening (2172B) interchangeably;
the first elastic piece (26) is arranged between the first plugging piece (24) and the driving piece (23), and drives, when the pressing piece (22) is released, the driving piece (23) to move towards the pressing hole (2181) until the driving piece (23) stops at the tooth bottom (21831) or the channel (2182); and
two ends of the second elastic piece (27) abut against the valve body (21) and the first plugging piece (24) respectively for driving the first plugging piece (24) to reset.

7. The valve (100) according to claim 1, **characterized in that** the valve core (20) is a water dividing valve core of a revolved body structure, and comprises a valve body (21), a pressing piece (22), a driving piece (23), a third elastic piece (28) and a second plugging piece (25);
the water inlet channel (212) and the at least one water outlet channel are formed in the valve body (21), the number of the water inlet channel (212) is one, and the number of the at least one water outlet channel is two for being a first water outlet channel (213A) and a second water outlet channel (213B) respectively; a water passing cavity (217) and a pressing cavity (218) are formed in the valve body (21); the water passing cavity (217) communicates with the water inlet channel (212), and a water passing wall (2173) vertical to the valve core (20) is axially arranged on an inner wall of the water passing cavity (217); the water passing wall (2173) is provided with a first water passing opening (2171A) and a second water passing opening (2172B) along a circumferential direction of the valve core (20), the first water passing opening (2171A) and the second water passing opening (2172B) being configured to communicate the water inlet channel (212) with the first water outlet channel (213A) and the second water channel (213B) respectively;
the pressing cavity (218) is provided with a pressing hole (2181) along an axial direction of the valve core (20), and a plurality of protruded blocks (2183) mutually spaced by a channel (2182) are arranged on a side wall of the pressing cavity (218) along the circumferential direction of the valve core (20), each of the plurality of protruded blocks (2183) having a toothed bottom surface, and the toothed bottom surface comprising a sliding connection surface (21832) inclined to a tooth bottom (21831) and a guide surface (21833) inclined to the channel (2182);
the pressing piece (22) is in rotation-stopping fit with the valve body (21) and slides relative to the valve body (21) along the axial direction of the valve core (20), one end of the pressing piece (22) stretching out of the pressing hole (2181) and the other end of the pressing piece (22) being provided with an inclined abutting surface (221);
the driving piece (23) is provided with an abutted surface (2321) opposite to the abutting surface (221) and an outer inclined surface (2331) opposite to the sliding connection surface (21832) and the guide surface (21833);
the third elastic piece (28) drives, when the pressing piece (22) is released, the driving piece (23) to move towards the pressing hole (2181) until the driving piece (23) stops at the tooth bottom (21831) or the channel (2182); and
the second plugging piece (25) is in rotation-stopping fit with the driving piece (23) and abuts against the water passing wall (2173), so as to plug the first water passing opening (2171A) and the second water passing opening (2172B) interchangeably.

8. A shower device, comprising the valve (100) according to any one of claim 1 to claim 7.

## Patentansprüche

1. Ein Ventil (100), das sich entlang einer horizontalen Richtung erstreckt, umfassend
- einen Ventilsitz (10);
- einen Ventileinsatz (20), wobei der Ventileinsatz (20) entlang einer ersten horizontalen Richtung in den Ventilsitz (10) eingesetzt ist und in jeder vertikalen Richtung in begrenztem Sitz mit dem Ventilsitz (10) ist, und der Ventileinsatz (20) mit mindestens einem Wassereinlasskanal (212) und mindestens einem Wasserauslasskanal versehen ist; und
- mehrere erste Anschlüsse (30), die jedem Wasserkanal des Ventileinsatzes (20) entsprechen, wobei die mehreren ersten Anschlüsse (30) entlang einer vertikalen Richtung und in Klemmpassung mit dem Ventilsitz (10) in den Ventilsitz (10) eingeführt sind und die mehreren ersten Anschlüsse (30) jeweils in die entsprechenden Wasserkanäle eingeführt und in Dichtpassung mit den entsprechenden Wasserkanälen eingesetzt sind, um den Wasserfluss in den Ventileinsatz (20) oder aus ihm heraus zu leiten,
- wobei der Ventilsitz (10) mit mehreren Klemmlöchern (11) für mehreren ersten Verbinder (30) versehen ist, um in diese eingeführt zu werden und mit ihnen in Einführpassung zu sein; und die mehreren ersten Verbinder (30) Klemmabschnitte haben, wobei die Klemmabschnitte geeignet sind, in elastischer Klemmpassung mit den Klemmlöchern (11) zu sein, wenn die mehreren ersten Verbinder (30) in die Klemmlöcher (11) eingeführt werden, um die Klemmpassung zwischen den mehreren ersten Verbindern (30) und dem Ventilsitz (10) zu erreichen,
- **dadurch gekennzeichnet, dass** axiale Begrenzungsabschnitte (14) an den hinteren Enden der Klemmlöcher (11) entlang der Einführrichtungen der mehreren ersten Verbinder (30) angeordnet sind und die Klemmabschnitte durch mehrere elastische Klemmklauen (33) gebildet werden, die symmetrisch entlang der Umfangsrichtungen der mehreren ersten Verbinder (30) angeordnet sind; und
- die mehreren elastischen Klemmklauen (33) in die mehreren Klemmlöcher (11) eingeführt werden und sich nach innen zusammenziehen, während sie von Innenwänden der mehreren Klemmlöcher (11) dagegen gedrückt werden, und die mehreren elastischen Klemmklauen (33) freigegeben werden, um sich nach außen auszudehnen, während sie sich zu den axialen Begrenzungsabschnitten (14) bewegen und in positionsbegrenzender Passung mit den axialen Begrenzungsabschnitten (14) entlang axialer Richtungen der mehreren Klemmlöcher (H) sind.

2. Das Ventil (100) nach Anspruch 1, **dadurch gekennzeichnet, dass** der Ventileinsatz (20) mit einem Ventilgehäuse (211) versehen ist, wobei das Ventilgehäuse (211) fest mit mehreren zweiten Verbindern (2111) versehen ist und der Wassereinlasskanal (212) und der mindestens eine Wasserauslasskanal jeweils in den mehreren zweiten Verbindern (2111) ausgebildet sind, und wobei jeder mehreren ersten Verbinder (30) jeweils in jeden mehreren zweiten Verbinder (2111) entsprechend entlang einer vertikalen Richtung eingesetzt ist und in Dichtungspassung mit diesem ist.

3. Das Ventil (100) nach Anspruch 1, **dadurch gekennzeichnet, dass** geneigte Führungsflächen (15) an den anfänglichen Enden der mehreren Klemmlöcher (11) entlang der Einführrichtungen der mehreren ersten Verbinder (30) angeordnet sind, um die mehreren elastischen Klemmklauen (33) zu führen, die in die mehreren Klemmlöcher (11) eingeführt werden sollen.

4. Das Ventil (100) nach Anspruch 1, **dadurch gekennzeichnet, dass** in Innenumfangswänden der mehreren Klemmlöcher (11) Nuten zum Verhindern einer Drehung ausgebildet sind und an Außenumfangswänden der mehreren ersten Verbinder (30) Rippen zum Verhindern einer Drehung (34) angeordnet sind; und wenn die mehreren ersten Verbinder (30) in die mehreren Klemmlöcher (11) eingeführt sind, die Nuten zum Verhindern einer Drehung mit den Rippen zum Verhindern einer Drehung (34) in lagebegrenzender Passung sind, um die Relativbewegung der mehreren ersten Verbinder (30) und des Ventilsitzes (10) entlang der Umfangsrichtungen der mehreren Klemmlöcher (11) zu begrenzen.

5. Das Ventil (100) nach Anspruch 1, **dadurch gekennzeichnet, dass** ein Ventilmantel (211) des Ventileinsatzes (20) mit einer Führungs- und Positionsbegrenzungsrippe (2112) versehen ist; und
eine Führungs- und Positionsbegrenzungsnut (17) im Ventilsitz (10) entlang der ersten horizontalen Richtung ausgebildet ist und in positionsbegrenzender Passung mit der Führungs- und Positionsbegrenzungsrippe auf einer vertikalen Ebene liegt, wodurch eine positionsbegrenzende Passung zwischen dem Ventileinsatz (20) und dem Ventilsitz (10) realisiert wird und der Ventileinsatz (20) so geführt wird, dass er in den Ventilsitz (10) entlang der ersten horizontalen Richtung eingesetzt werden kann, und es ermöglicht wird, dass der Wassereinlasskanal (212) und der mindestens eine Wasserauslasskanal mit den mehreren Klemmlöchern (11) des Ventilsitzes (10) entlang einer vertikalen Richtung ausgerichtet werden kann.

6. Das Ventil (100) nach Anspruch 1, **dadurch gekennzeichnet, dass** der Ventileinsatz (20) ein Wasserteiler-Ventileinsatz mit einer drehbaren Körperstruktur ist und einen Ventilkörper (21), ein Druckteil (22), ein Antriebsteil (23), ein erstes Verstopfungsteil (24), ein erstes elastisches Teil (26) und ein zweites elastisches Teil (27) umfasst;
der Wassereinlasskanal (212) und der mindestens eine Wasserauslasskanal in dem Ventilkörper (21) ausgebildet sind, die Anzahl des Wassereinlasskanals (212) eins ist und die Anzahl des mindestens einen Wasserauslasskanals zwei ist, wobei der mindestens eine Wasserauslasskanal ein erster Wasserauslasskanal (213A) bzw. ein zweiter Wasserauslasskanal (213B) ist; ein Wasserdurchlasshohlraum (217) und ein Presshohlraum (218) in dem Ventilkörper (21) ausgebildet sind; der Wasserdurchlasshohlraum (217) mit dem Wassereinlasskanal (212) in Verbindung steht und mit einer ersten Wasserdurchlassöffnung (2171A) und einer zweiten Wasserdurchlassöffnung (2172B) versehen ist, wobei die erste Wasserdurchlassöffnung (2171A) und die zweite Wasserdurchlassöffnung (2172B) jeweils so konfiguriert sind, dass sie den Wassereinlasskanal (212) mit dem ersten Wasserauslasskanal (213A) und dem zweiten Wasserauslasskanal (213B) verbinden; der Presshohlraum (218) mit einem Pressloch (2181) entlang einer axialen Richtung des Ventileinsatzes (20) versehen ist, und mehrere vorstehende Blöcke (2183), die durch einen Kanal (2182) voneinander in Abstand gehalten werden, an einer Seitenwand des Presshohlraums (218) entlang einer Umfangsrichtung des Ventileinsatzes (20) angeordnet sind, jeder mehreren vorstehenden Blöcke (2183) eine gezahnte Bodenfläche aufweist und die gezahnte Bodenfläche eine zu einem Zahnboden (21831) geneigte Gleitverbindungsfläche (21832) und eine zu dem Kanal (2182) geneigte Führungsfläche (21833) umfasst;
das Pressteil (22) in drehfester Passung mit dem Ventilkörper (21) ist und sich relativ zu dem Ventilkörper (21) entlang der axialen Richtung des Ventileinsatzes (20) verschiebt, wobei sich ein Ende des Pressteils (22) aus der Pressbohrung (2181) erstreckt und das andere Ende des Pressteils (22) mit einer geneigten Anlagefläche (221) versehen ist;
das Antriebsteil (23) mit einer der Anschlagfläche (221) gegenüberliegenden Anschlagfläche (2321) und einer der Gleitverbindungsfläche (21832) und der Führungsfläche (21833) gegenüberliegenden äußeren geneigten Fläche (2331) versehen ist;
das erste Verschlussteil (24) vom Antriebsteil (23) angetrieben wird, um in der Wasserdurchlauföffnung (217) entlang der axialen Richtung des Ventileinsatzes (20) zu gleiten und die erste Wasserdurchlauföffnung (2171 A) und die zweite Wasserdurchlauföffnung (2172B) abwechselnd zu verschließen;
das erste elastische Teil (26) zwischen dem ersten Verschlussteil (24) und dem Antriebsteil (23) angeordnet ist und, wenn das Druckteil (22) gelöst wird, das Antriebsteil (23) antreibt, sich in Richtung des Drucklochs (2181) zu bewegen, bis das Antriebsteil (23) am Zahnboden (21831) oder dem Kanal (2182) anhält, und zwei Enden des zweiten elastischen Teils (27) an dem Ventilkörper (21) und das jeweils erste Verschlussteil (24) anliegen, um das erste Verschlussteil (24) zum Zurücksetzen anzutreiben.

7. Das Ventil (100) nach Anspruch 1, **dadurch gekennzeichnet, dass** der Ventileinsatz (20) ein Wasserteilerventileinsatz mit einer gedrehten Körperstruktur ist und einen Ventilkörper (21), ein Druckteil (22), ein Antriebsteil (23), ein drittes elastisches Teil (28) und ein zweites Verschlussteil (25) umfasst;
der Wassereinlasskanal (212) und der mindestens eine Wasserauslasskanal in dem Ventilkörper (21) ausgebildet sind, die Anzahl des Wassereinlasskanals (212) eins ist und die Anzahl des mindestens einen Wasserauslasskanals zwei ist, um einen ersten Wasserauslasskanal (213A) und einen zweiten Wasserauslasskanal (213B) zu bilden; in dem Ventilkörper (21) ist ein Wasserdurchlassraum (217) und ein Presshohlraum (218) ausgebildet; der Wasserdurchlaufhohlraum (217) mit dem Wassereinlasskanal (212) kommuniziert und eine Wasserdurchlaufwand (2173) vertikal zum Ventileinsatz (20) axial an einer Innenwand des Wasserdurchlaufhohlraums (217) angeordnet ist; die Wasserdurchlasswand (2173) mit einer ersten Wasserdurchlassöffnung (2171 A) und einer zweiten Wasserdurchlassöffnung (2172B) entlang einer Umfangsrichtung des Ventileinsatzes (20) versehen ist, wobei die erste Wasserdurchlassöffnung (2171 A) und die zweite Wasserdurchlassöffnung (2172B) so eingerichtet sind, dass sie den Wassereinlasskanal (212) mit dem ersten Wasserauslasskanal (213A) und dem zweiten Wasserkanal (213B) kommunizieren;
der Presshohlraum (218) mit einem Pressloch (2181) entlang einer axialen Richtung des Ventileinsatzes (20) versehen ist und mehrere von vorstehenden Blöcken (2183), die durch einen Kanal (2182) voneinander auf Abstand gehalten werden, an einer Seitenwand des Presshohlraums (218) entlang der Umfangsrichtung des Ventileinsatzes (20) angeordnet sind, jeder der mehreren vorstehenden Blöcke (2183) eine gezahnte Bodenfläche aufweist und die gezahnte Bodenfläche eine Gleitverbindungsfläche (21832), die zu einem Zahnboden (21831) geneigt ist, und eine Führungsfläche (21833), die zu dem Kanal (2182) geneigt ist, umfasst;
das Pressteil (22) in drehfester Passung mit dem Ventilkörper (21) ist und sich relativ zu dem Ventilkörper (21) entlang der axialen Richtung des Ventileinsatzes (20) verschiebt, wobei sich ein Ende des Pressteils (22) aus der Pressbohrung (2181) erstreckt und das andere Ende des Pressteils (22) mit einer geneigten Anlagefläche (221) versehen ist;
das Antriebsteil (23) mit einer der Anschlagfläche (221) gegenüberliegenden Anschlagfläche (2321) und einer der Gleitverbindungsfläche (21832) und der Führungsfläche (21833) gegenüberliegenden äußeren geneigten Fläche (2331) versehen ist;
das dritte elastische Teil (28) treibt, wenn das Druckteil (22) losgelassen wird, das Antriebsteil (23) an, sich in Richtung der Pressbohrung (2181) zu bewegen, bis das Antriebsteil (23) an der Zahnunterseite (21831) oder dem Kanal (2182) anhält; und das zweite Verschlussteil (25) in drehfester Passung mit dem Antriebsteil (23) ist und an der Wasserdurchlaufwand (2173) anliegt, so dass die erste Wasserdurchlauföffnung (2171 A) und die zweite Wasserdurchlauföffnung (2172B) austauschbar verschlossen sind.

8. Eine Duschvorrichtung, umfassend das Ventil (100) nach einem der Ansprüche 1 bis 7.

## Revendications

1. Soupape (100) s'étendant le long d'une direction horizontale, comprenant :
. un siège de soupape (10) ;
. un noyau de soupape (20), le noyau de soupape (20) étant inséré dans le siège de soupape (10) le long d'une première direction horizontale et en ajustement de limitation avec le siège de soupape (10) dans une quelconque direction verticale, et le noyau de soupape (20) étant pourvu d'au moins un canal d'entrée d'eau (212) et d'au moins un canal de sortie d'eau ; et
. une pluralité de premiers connecteurs (30) correspondant à chaque canal d'eau du noyau de soupape (20), la pluralité de premiers connecteurs (30) étant insérés dans le siège de soupape (10) le long d'une direction verticale et en ajustement de serrage avec le siège de soupape (10), et la pluralité de premiers connecteurs (30) étant insérés respectivement à l'intérieur et en ajustement étanche avec les canaux d'eau correspondants de façon à conduire un écoulement d'eau dans le noyau de soupape (20) ou hors de celui-ci,
. le siège de soupape (10) étant pourvu d'une pluralité de trous de serrage (11) pour la pluralité de premiers connecteurs (30) devant être insérés à l'intérieur et en ajustement d'insertion avec ceux-ci ; et la pluralité de premiers connecteurs (30) ont des parties de serrage, les parties de serrage étant adaptées pour être dans un ajustement de serrage élastique avec les trous de serrage (11) lorsque la pluralité de premiers connecteurs (30) sont insérés dans les trous de serrage (11), de manière à obtenir l'ajustement de serrage entre la pluralité de premiers connecteurs (30) et le siège de soupape (10),
. **caractérisée en ce que** des parties de limitation axiales (14) sont disposées au niveau des extrémités de queue des trous de serrage (11) le long des directions d'insertion de la pluralité de premiers connecteurs (30), et les parties de serrage sont formées par une pluralité de pinces de serrage élastiques (33) qui sont disposées de manière symétrique le long des directions circonférentielles de la pluralité de premiers connecteurs (30) ; et
. la pluralité de pinces de serrage élastiques (33) sont insérées dans la pluralité de trous de serrage (11) et se contractent vers l'intérieur tout en étant poussées contre des parois internes de la pluralité de trous de serrage (11), et la pluralité de pinces de serrage élastiques (33) sont libérées pour s'étendre vers l'extérieur tout en se déplaçant vers les parties de limitation axiales (14) et sont en ajustement de limitation de position avec les parties de limitation axiales (14) le long des directions axiales de la pluralité de trous de serrage (11).

2. Soupape (100) selon la revendication 1, **caractérisée en ce que** le noyau de soupape (20) est pourvu d'une enveloppe de soupape (211), l'enveloppe de soupape (211) est pourvue fixement d'une pluralité de deuxièmes connecteurs (2111), et le canal d'entrée d'eau (212) et l'au moins un canal de sortie d'eau sont formés respectivement dans la pluralité de deuxièmes connecteurs (2111) ; et chacun de la pluralité de premiers connecteurs (30) est inséré respectivement à l'intérieur et en ajustement étanche avec chacun de la pluralité de deuxièmes connecteurs (2111) de manière correspondante le long d'une direction verticale.

3. Soupape (100) selon la revendication 1, **caractérisée en ce que** des surfaces de guidage inclinées (15) sont disposées au niveau des extrémités initiales de la pluralité de trous de serrage (11) le long des directions d'insertion de la pluralité de premiers connecteurs (30) pour guider la pluralité de pinces de serrage élastiques (33) devant être insérées dans la pluralité de trous de serrage (11).

4. Soupape (100) selon la revendication 1, **caractérisée en ce que** des rainures d'arrêt de rotation sont formées dans des parois circonférentielles internes de la pluralité de trous de serrage (11), et des nervures d'arrêt de rotation (34) sont disposées sur des parois circonférentielles externes de la pluralité de premiers connecteurs (30) ; et les rainures d'arrêt de rotation sont en ajustement de limitation de position avec les nervures d'arrêt de rotation (34) lorsque la pluralité de premiers connecteurs (30) sont insérés dans la pluralité de trous de serrage (11), de manière à limiter le mouvement relatif de la pluralité de premiers connecteurs (30) et du siège de soupape (10) le long des directions circonférentielles de la pluralité de trous de serrage (11).

5. Soupape (100) selon la revendication 1, **caractérisée en ce qu'**une enveloppe de soupape (211) du noyau de soupape (20) est pourvue d'une nervure de limitation de position et de guidage (2112) ; et
une rainure de limitation de position et de guidage (17) est formée dans le siège de soupape (10) le long de la première direction horizontale et est en ajustement de limitation de position avec la nervure de limitation de position et de guidage sur un plan vertical, ce qui permet de réaliser un ajustement de limitation de position entre le noyau de soupape (20) et le siège de soupape (10) et de guider le noyau de soupape (20) devant être inséré dans le siège de soupape (10) le long de la première direction horizontale, et ce qui permet au canal d'entrée d'eau (212) et à l'au moins un canal de sortie d'eau d'être alignés avec la pluralité de trous de serrage (11) du siège de soupape (10) le long d'une direction verticale.

6. Soupape (100) selon la revendication 1, **caractérisée en ce que** le noyau de soupape (20) est un noyau de soupape de division d'eau d'une structure de corps tournante, et comprend un corps de soupape (21), un élément de pression (22), un élément d'entraînement (23), un premier élément d'obturation (24), un premier élément élastique (26) et un deuxième élément élastique (27) ;
le canal d'entrée d'eau (212) et l'au moins un canal de sortie d'eau sont formés dans le corps de soupape (21), le numéro du canal d'entrée d'eau (212) est un, et le numéro de l'au moins un canal de sortie d'eau est deux, l'au moins un canal de sortie d'eau devant être un premier canal de sortie d'eau (213A) et un deuxième canal de sortie d'eau (213B) respectivement ; une cavité de passage d'eau (217) et une cavité de pression (218) sont formées dans le corps de soupape (21) ; la cavité de passage d'eau (217) communique avec le canal d'entrée d'eau (212) et est pourvue d'une première ouverture de passage d'eau (2171A) et d'une deuxième ouverture de passage d'eau (2172B), la première ouverture de passage d'eau (2171A) et la deuxième ouverture de passage d'eau (2172B) étant configurées respectivement pour faire communiquer le canal d'entrée d'eau (212) avec le premier canal de sortie d'eau (213A) et le deuxième canal d'eau (213B) ; la cavité de pression (218) est pourvue d'un trou de pression (2181) le long d'une direction axiale du noyau de soupape (20), et une pluralité de blocs protubérants (2183) espacés mutuellement par un canal (2182) étant disposés sur une paroi latérale de la cavité de pression (218) le long d'une direction circonférentielle du noyau de soupape (20), chacun de la pluralité de blocs protubérants (2183) ayant une surface inférieure dentée et la surface inférieure dentée comprenant une surface de connexion coulissante (21832) inclinée vers une partie inférieure de dent (21831) et une surface de guidage (21833) inclinée vers le canal (2182) ;
l'élément de pression (22) est en ajustement d'arrêt de rotation avec le corps de soupape (21) et coulisse par rapport au corps de soupape (21) le long de la direction axiale du noyau de soupape (20), une extrémité de l'élément de pression (22) s'étendant à l'extérieur du trou de pression (2181) et l'autre extrémité de l'élément de pression (22) étant pourvue d'une surface de butée inclinée (221) ;
l'élément d'entraînement (23) étant pourvu d'une surface en butée (2321) opposée à la surface de butée (221) et d'une surface inclinée externe (2331) opposée à la surface de connexion coulissante (21832) et à la surface de guidage (21833) ;
le premier élément d'obturation (24) est entraîné par l'élément d'entraînement (23) pour coulisser dans la cavité de passage d'eau (217) le long de la direction axiale du noyau de soupape (20) et obturer la première ouverture de passage d'eau (2171A) et la deuxième ouverture de passage d'eau (2172B) de manière interchangeable ;
le premier élément élastique (26) est disposé entre le premier élément d'obturation (24) et l'élément d'entraînement (23), et entraîne, lorsque l'élément de pression (22) est libéré, l'élément d'entraînement (23) à se déplacer vers le trou de pression (2181) jusqu'à ce que l'élément d'entraînement (23) s'arrête au niveau de la partie inférieure de dent (21831) ou du canal (2182) ; et
deux extrémités du deuxième élément élastique (27) viennent en butée contre le corps de soupape (21) et le premier élément d'obturation (24) respectivement pour entraîner le premier élément d'obturation (24) à se remettre à l'état initial.

7. Soupape (100) selon la revendication 1, **caractérisée en ce que** le noyau de soupape (20) est un noyau de soupape de division d'eau d'une structure de corps tournante, et comprend un corps de soupape (21), un élément de pression (22), un élément d'entraînement (23), un troisième élément élastique (28) et un deuxième élément d'obturation (25) ;
le canal d'entrée d'eau (212) et l'au moins un canal de sortie d'eau sont formés dans le corps de soupape (21), le numéro du canal d'entrée d'eau (212) est un, et le numéro de l'au moins un canal de sortie d'eau est deux afin d'être un premier canal de sortie d'eau (213A) et un deuxième canal de sortie d'eau (213B) respectivement; une cavité de passage d'eau (217) et une cavité de pression (218) sont formées dans le corps de soupape (21) ; la cavité de passage d'eau (217) communique avec le canal d'entrée d'eau (212), et une paroi de passage d'eau (2173) verticale par rapport au noyau de soupape (20) est disposée axialement sur une paroi interne de la cavité de passage d'eau (217) ; la paroi de passage d'eau (2173) est pourvue d'une première ouverture de passage d'eau (2171A) et d'une deuxième ouverture de passage d'eau (2172B) le long d'une direction circonférentielle du noyau de soupape (20), la première ouverture de passage d'eau (2171A) et la deuxième ouverture de passage d'eau (2172B) étant configurées pour faire communiquer le canal d'entrée d'eau (212) avec le premier canal de sortie d'eau (213A) et le deuxième canal d'eau (213B) respectivement ;
la cavité de pression (218) est pourvue d'un trou de pression (2181) le long d'une direction axiale du noyau de soupape (20), et une pluralité de blocs protubérants (2183) espacés mutuellement par un canal (2182) sont disposés sur une paroi latérale de la cavité de pression (218) le long de la direction circonférentielle du noyau de soupape (20), chacun de la pluralité de blocs protubérants (2183) ayant une surface inférieure dentée, et la surface inférieure dentée comprenant une surface de connexion coulissante (21832) inclinée vers une partie inférieure de dent (21831) et une surface de guidage (21833) inclinée vers le canal (2182) ;
l'élément de pression (22) est en ajustement d'arrêt de rotation avec le corps de soupape (21) et coulisse par rapport au corps de soupape (21) le long de la direction axiale du noyau de soupape (20), une extrémité de l'élément de pression (22) s'étendant hors du trou de pression (2181) et l'autre extrémité de l'élément de pression (22) étant pourvue d'une surface de butée inclinée (221) ;
l'élément d'entraînement (23) étant pourvu d'une surface en butée (2321) opposée à la surface de butée (221) et d'une surface inclinée externe (2331) opposée à la surface de connexion coulissante (21832) et à la surface de guidage (21833) ;
le troisième élément élastique (28) entraîne, lorsque l'élément de pression (22) est libéré, l'élément d'entraînement (23) à se déplacer vers le trou de pression (2181) jusqu'à ce que l'élément d'entraînement (23) s'arrête au niveau de la partie inférieure de dent (21831) ou du canal (2182) ; et
le deuxième élément d'obturation (25) est en ajustement d'arrêt de rotation avec l'élément d'entraînement (23) et vient en butée contre la paroi de passage d'eau (2173), de manière à obturer la première ouverture de passage d'eau (2171A) et la deuxième ouverture de passage d'eau (2172B) de manière interchangeable.

8. Dispositif de douche, comprenant la soupape (100) selon l'une quelconque de la revendication 1 à la revendication 7.
